# EUROPEAN PATENT APPLICATION

(11) **EP 4 368 543 A1**
(43) Date of publication of application: **15.05.2024**
(21) Application number: 23208921.9
(22) Date of filing: 09.11.2023
(51) Int. Cl.: B65G 47/32, A21C 15/00, B65G 47/88, B65G 59/00

(54) **DENESTING MACHINE**

(30) Priority: 09.11.2022 GB 202216730
(71) Applicant: Millitec Food Systems Limited, Derby, Derbyshire DE72 3PS (GB)
(72) Inventor: Kazakeviciute, Julija, Derbyshire, DE72 3PS (GB)
(74) Representative: Adamson Jones

(57) **Abstract**

There is disclosed apparatus for denesting or destacking products from a stack, such as slices of bread or other foodstuffs. An input conveyor advances a stack of products in an axial direction to a destacking mechanism such that the end product of the stack is presented to the destacking mechanism. The destacking mechanism comprises a rotating engagement member for engaging the end product of the stack in a direction that is offset from the axial direction to cause separation of the end product from the stack. A movable carriage receives the separated product from the engagement member and carries the separated product to an output conveyor.

## Description

The present disclosure relates to a denesting or destacking machine, particularly, but not limited to, a machine for separating food items, e.g. slices of bread from a stack.

### Background of the invention

Denesting or destacking involves taking a stack of items, and placing the items in a side by side configuration, e.g. laid flat on a conveyor or similar. This allows the goods to me more easily processed at a later stage. Typically, this would be performed manually. However, it can be appreciated this a slow and labourintensive process.

A prior art denesting machine is shown in US10370196 B2. The machine comprises a conveyor having cleats and guide rods. Frozen burger patties are placed into a hopper provided over the conveyor. The conveyor moves the patties in an upward direction, with patties being constrained by a receptacle defined by the cleats and guide rods. Any patties that are not constrained within the receptacle fall back into the hopper. The patties then drop down the opposing side of the machine into a conveyor, such that they are provided in a side-by-side arrangement.

The inventor has found that such an apparatus may be suitable for use with frozen patties, which are generally low friction and strong (i.e. not brittle or soft). However, for delicate objects, such a bread or baked products, such an apparatus would likely become jammed due to friction between the goods riding the conveyor, and/or the goods may become damaged.

The present invention thus aims to overcome or ameliorate one or more of the above problems. It may be considered an aim of the invention to provide a denesting apparatus suitable for non-frozen or compliant foodstuffs.

### Statement of Invention

According to a first aspect, there is provided a denesting apparatus for separating products from a stack comprising: an input mechanism configured to input nested products into a denesting mechanism; the denesting mechanism comprising a movable engagement member configured to selectively engage an end product of the nested products to provide separation of the end product from the stack, and a movable carriage configured to receive the separated product from the engagement member; and, an output mechanism configured to output the separated products, where the moveable carriage moves the separated product to the output mechanism.

The moveable engagement member may comprise a rotatable member having a protrusion. The protrusion may be rotatable into engagement with the stacked product to provide separation thereof from the stack. The protrusion may comprise a plate or blade. The moveable engagement member may comprise a rotatable eccentric member.

The moveable engagement member may comprise a drum or roller. The protrusion may depend radially outwardly from the drum or roller. The protrusion may extend, e.g. linearly/axially, along the drum or roller.

The movable carriage may comprise a rotatable carousel. The carousel may comprise a flat face to receive the product. The carousel may comprise a plurality of faces. The faces may be disposed about respective sides of the carousel. Each face may be rotatable to a position to receive the product. The faces may be disposed at different angles, e.g. angularly spaced about an axis of rotation.

The carousel may be triangular. The carousel may be polygonal. One or more face may comprise a flange or lip to retain the product thereon.

The moveable carriage may be below the destacking mechanism and/or engagement member, e.g. when contacting the end product of the stack.

The carousel may be movable to first position where one end of the face is aligned with the input mechanism. The carousel may be movable to a second position where a second end of the face is aligned with the output mechanism.

In the first position, the face may be angled toward the input mechanism. In the second position, the face may be angled toward the output mechanism.

The input mechanism and/or output mechanism comprises a conveyor. The conveyor may comprise a plurality of discrete bands or wires. The input mechanism and/or output mechanism comprise a divider to divide the input mechanism and/or output mechanism into a plurality lanes. Each lane may comprise a plurality of bands/wires. The lanes may be parallel.

The input mechanism may extend in a horizontal direction in use. The input mechanism may be angled toward the denesting mechanism to bias the stacked product thereinto. The input mechanism may be ramped. The input mechanism may be angled at between 1 and 15 degrees relative to horizontal.

A part of the output mechanism may extend into or through the movable carriage. The moveable carriage may be shaped to receive the output mechanism.

The output mechanism may comprise an output conveyor. The movable carriage may comprise cut-outs to receive a conveyor member of the output mechanism. A roller for the conveyor may be provided within the movable carriage.

The apparatus may comprise a cage or enclosure configured to at least partially enclose the desnesting mechanism. The cage/enclosure may be openable/removable. The cage/enclosure may comprise grating/grille.

The apparatus may comprise a sensor to detect the presence/position of the cage/enclosure. The apparatus may be configured to prevent operation thereof in the event the presence of the cage/enclosure is not detected (e.g. operation of the denesting mechanism is prevented).

The movable engagement member and the movable carriage may be synchronised and/or act in concert to denest and dispense the product. The movable engagement member and/or the movable carriage may be synchronised and/or act in concert with the input and/or output mechanism.

The apparatus may comprise a sensor configured to detect the position and/or orientation of the movable engagement member. The sensor may detect the position of the protrusion of the movable engagement member. The sensor may comprise a magnetic sensor. The protrusion may comprise a magnet/magnetic material.

The apparatus may comprise a controller to control movement of the moveable engagement member.

According to a further aspect, there is provided: a food production line comprising the apparatus of the first aspect. The food product may comprise bread, cake or other baked product. The food product may comprise a sliced product. The products may be stacked in a horizontal direction.

The apparatus may be supported by a framework. The framework may comprise one or more wheel. The apparatus may be portable.

According to a further aspect, there is provided a destacking apparatus of a food production line according to any preceding aspect, where the food product comprises a sliced bread product or other baked product.

According to a further aspect, there is provided: a method of denesting nested products comprising: inputting nested products into a denesting mechanism via an input mechanism; denesting the product by selectively engaging an end product of the stacked products to provide separation of the end product from the stack; receiving the denested product from the engagement member in a movable carriage and moving the denested product to an output mechanism; and outputting the denested product via the input mechanism;
Any optional or preferable features described in relation to any one aspect of the invention may be applied to any further aspect, wherever practicable.

Reference to 'nested' products herein may comprise stacked products or a stack of products, which may or may not be a vertically-oriented stack. References to 'denesting' may comprise destacking or removal of individual products from a stack. The products may be loosely/weakly coupled when nested/stacked. The terms 'nested' and 'stacked' may be used herein interchangeably, as well as the terms 'denested' and 'destacked'.

### Detailed Description

Practicable embodiments of the disclosure are described below in further detail, by way of example only, with reference to the accompanying drawings, of which:
**Figure 1** shows a perspective view of a destacking apparatus;
**Figure 2** shows a side view of the destacking apparatus;
**Figure 3** shows a top-down view of the destacking apparatus;
**Figure 4** shows a sectional perspective view of the destacking apparatus;
**Figure 5** shows a sectional side view of the destacking apparatus;

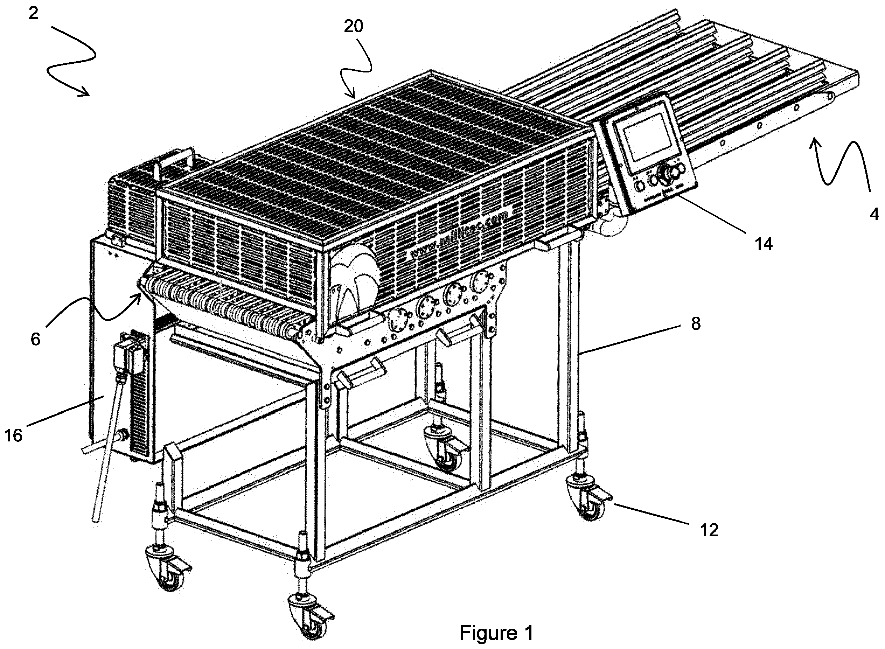

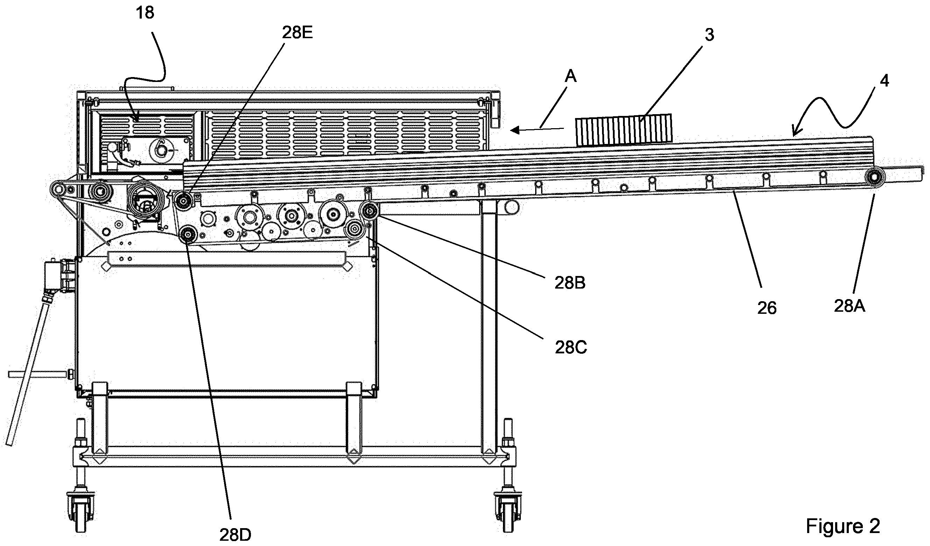

A destacking machine 2 is shown in figure 1. The destacking machine is configured to denest, destack or otherwise separate a stack or pile of goods 3 shown schematically in figure 2. In the present embodiment, the goods comprise a bread product, in particular a stack of sliced bread, e.g. a sliced loaf or larger stack. However, it can be appreciated that the apparatus may be used to denest/destack any suitable product. The product may comprise a food product. Thus, the machine 2 comprises a food-safe arrangement (e.g. constructed using food-safe materials).

In generally, the product comprises a flat, planar or leaved/sliced item with one dimension being significantly less than the other two dimensions, e.g. a thickness or depth being significantly smaller than the length/width of the item. The thickness/depth will typically be less than one fifth or one sixth of the length/width and may be at least an order of magnitude smaller.

The machine 2 comprises an input conveyor 4. The stacked product is provided on the input conveyor 4 to be fed into the destacking system. The machine 2 comprise an output conveyor 6. The output conveyor 6 outputs the destacked products in a separated, laid flat and/or side-by-side configuration. The input conveyor 4 is axially longer than the output conveyor 6 (e.g. between 2 and 20 times longer). The input conveyor 6 therefore temporarily stores the stacked product.

The destacked product is generally discharged from the output conveyor 6. The destacked product may be discharged onto an adjacent conveyor for further processing. In some embodiments, the output conveyor 6 may be significantly longer, and further processing of the destacked products may be performed thereon.

The machine 2 comprises a framework 10. The framework 10 comprises wheels/castors 12. The machine 2 is thus portable. The machine 2 may therefore be moved to any suitable position in a production line (e.g. next to a conveyor or other processing machine). The machine 2 comprise a control system/display unit 14. This allows control and/or monitoring of the system. An electronics unit 16 may provided power to the machine 2 (e.g. to power and/or control the conveyors 4,6 and/or the destacking mechanism 18).

A cage arrangement 20 is configured to enclose the destacking mechanism 18. This helps to prevent contamination and/or accidental injury. The cage arrangement 20 may at least partially enclose the conveyors 4,6. The cage 20 may be openable and/or removable to allow access to the internal space enclosed therein (e.g. for maintenance or the like). The cage 20 comprise a grating or grille like arrangement. The cage 20 may act as a guard to prevent insertion of foreign objects or manual access to the interior during operation of the machine 2.

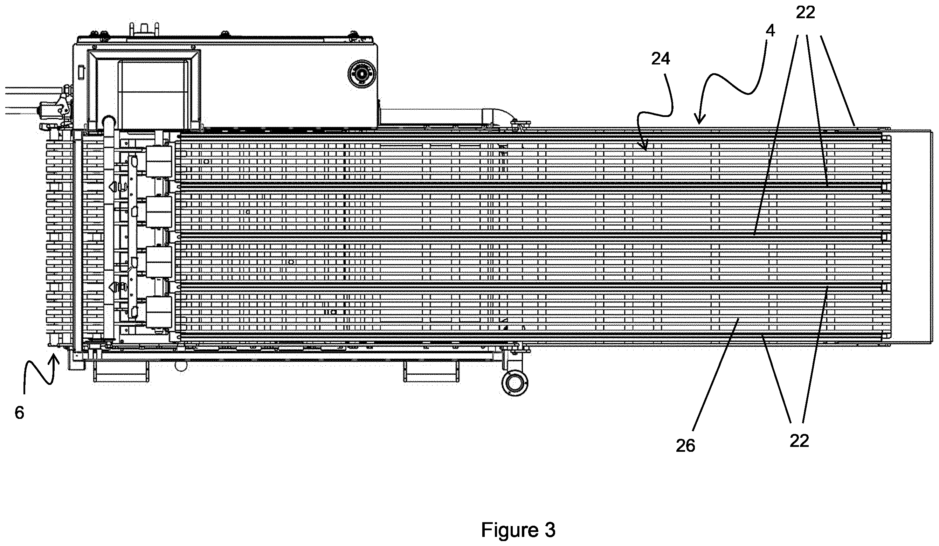

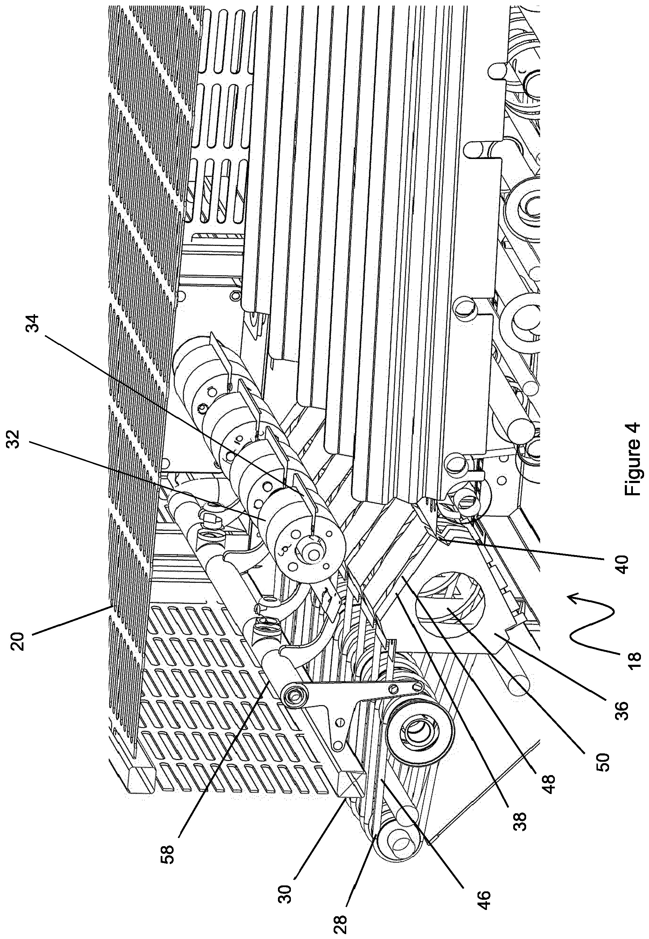

As best seen in figures 3 and 4, the input conveyor 4 comprises a plurality of guides 22. The guides 22 ensure the product is retained on the conveyor 4. The guides divide the conveyor 4 into a plurality of lanes 24. This allows parallel processing of a plurality of products (i.e. to provide simultaneous processing of a plurality of stacks). In the present embodiment, four lanes 24 are provided. However, it can be appreciated any number of lanes may be provided, for example, between one and ten. The guides 22 extend substantially the full length of the input conveyor 4.

The guides 22 comprise an undulating or corrugated shape, e.g. in section. This increases the rigidity thereof.

In the present embodiment, the lanes 24 are parallel to one another (e.g. in a side-by-side configuration). In other embodiments, the lanes may be curved, angled and/or divergent (e.g. converging towards the denesting mechanism). This may allow different goods or different sources to be processed.

The input conveyor 4 is generally arranged in a horizontal direction in use (i.e. the stacked product moves a generally horizontal direction along the conveyor). The input conveyor 4 is angled/sloping toward the destacking mechanism 18 in this embodiment, i.e. downwardly sloping towards the destacking mechanism 18. This helps to bias the product to/against destacking mechanism 18. The input conveyor 4 is provided at an angle less than or equal 45 degrees relative horizontal; preferably, less than or equal to 30 degrees; preferably, less than or equal to 20 degrees. The input conveyor 4 may be angled relative to the horizontal by between 1 and 15 degrees.

In some embodiments, guides may be provided on the output conveyor 6. However, it can be appreciated that the product will be provided in a laid flat configuration at that point, and so such an arrangement may not be required. In some embodiments, the output conveyor 6 may be angled toward/away from the denesting mechanism 18.

The input conveyor 4 comprises a plurality of conveying members 26. The conveying members are configured to support the product in use. The conveying members 26 extend between rollers 28A-E configured to effect movement thereof.

The conveying members 26 are narrower than the lanes in this example, i.e. extending only part way across the width of the lane 24 (e.g. less than 10% of the width thereof). This provides minimal contact between the product and the conveyor 4. The conveying members 26 comprise bands, cords, thin belts or wires.

A plurality of conveyor members 26 are provided in each lane, e.g. in parallel. In the present embodiment, each lane 24 comprises six conveying members 26. However, it can be appreciated that any number of conveying members 26 may be used, depending on the width of the lane 24/bands 26. The narrow conveying members are spaced laterally. As such any debris etc will tend to fall through the gaps there-between rather than being carried with the conveyor.

The conveying members 26 are typically endless loops. The conveying members are typically driven synchronously, i.e. in parallel, to move the nested products under control towards/into the destacking mechanism.

The elongate nature of the input conveyor allows long stacks of to be arranged for destacking. Thus an operator can readily see the feed of stacked products, e.g. to ensure the destacking mechanism is correctly/constantly fed. Sensors may be used to sense the presence and/or length of stacks on the input conveyor 4.

The output conveyor 6 may comprises a conveyor member 28 substantially the same as the input conveyor. An edge 30 of the cage 20 is spaced from the output conveyor 6. The spacing is optimised to allow the product to pass therethrough, whilst preventing the ingress of fingers, etc. The output conveyor 6 is typically a driven conveyor but could comprise a passive conveyor or chute, etc.

It will be appreciated that the input conveyor/mechanism 4 conveys and/or presents the stack 3 (see figure 2) in an axial configuration to the destacking mechanism 18. That is to say, the products of the stack are stacked in an axial direction A, which also represents the direction of travel of the stack towards the destacking mechanism 18, e.g. to present the end product of the stack 3 for denesting.

The direction A may also represent the orientation of the depth/thickness of the products in the stack. The face/area of the products in the stack may face the destacking mechanism 18 as the stack 3 advances.

The destacking mechanism is based on the principle that a rotating denesting member rotates about an axis that is generally perpendicular to the axis A so as to engage or remove the end product from the stack 3.

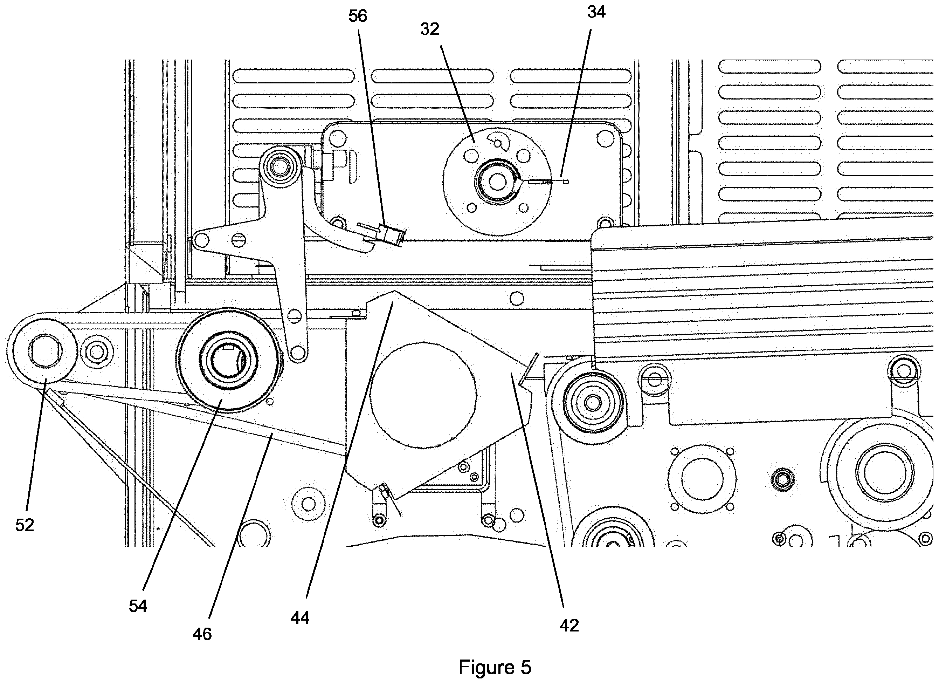

The destacking mechanism 18 is described in detail in reference to figures 4 and 5. The mechanism comprises a rotating drum 32. The drum 32 comprises a roller or cylinder. In use, the product rests against the drum 32 (e.g. due to the angled input conveyor 4). The drum may be hollow and may be axially mounted.

A plate/blade 34 is mounted to the drum 32. The plate 32 extends radially outward from the drum 32. The plate 34 extends along the axial length of the drum 32 (e.g. the width thereof). The plate 34 in this example spans the entire lateral/width dimension of the drum 32.

The plate 34 may be embedded within the drum 32. The plate is received in a correspondingly shaped groove, recess or opening in the drum 32, e.g. a discontinuity in the material of the drum. The plate 34 may be retained via a clip or like. The plate 34 may therefore be removable/replaceable.

The plate may extend through the drum 32, e.g. to/towards its hollow axial interior.

The plate 34 is configured to engage the product and to push the product to separate it from its stack in use. For example, where the product is a slice of bread, the plate 34 engages the thin upper end of the slice of bread. The plate 34 pushes the thin end downwards and/or toward the output conveyor 6. The plate 34 pushes the bread sufficiently far, that the slice falls into a flat configuration under gravity. The slice of bread therefore moves from a generally vertical position to a horizontal position. Typically, this is achieved by continuously rotating the drum 32 (i.e. in a clockwise direction in the figures), such that each rotation engages the next product.

Suitable motors are provided to effect movement of the drum 32. When the plate 34 faces away from the input conveyor 4, the next product engages the drum 32, and due to the smooth surface of the drum, the drum 32 can freely rotate relative thereover. The next product is then destacked once the plate 34 returns to the position in figure 4, and the engages the next product.

In some embodiments, once the product has been destacked the drum 32 may rotate in the opposing direction (e.g. to reach the position in figure 4). The drum 32 may therefore oscillate. However, it can be appreciated, in such an arrangement, the plate 34 may scrape against the product, and so may be sub-optimal.

The radial length/height of the protrusion, i.e. plate/blade 34, beyond the drum surface is less than or equal to the thickness of the individual products to be denested. This ensures the plate 34 acts only on the end product of the approaching stack. Due to the deformable nature of slices of bread, the height of the plate 34 above the drum surface does not need to match the width of the slice of bread exactly. However, in other embodiments and for other foodstuffs, the height of the plate/protrusion could be adjusted, e.g. to match the product width or otherwise.

The plate 34 in this embodiment is relatively thin/flat, e.g. having a thickness of less than 10mm or 5mm, e.g. being in the order of 1-3mm. The plate 34 thus presents a relatively sharp free edge to the end product of the stack. The edge of the plate 34 can serve to prize the interface between the end product and the next product of the stack apart in use. In some examples, the plate height can be tailored so the free edge of the plate 34 engages into the interface.

It can be appreciated that the drum 32 may comprise any suitable protrusion to engage the product. For example, the protrusion may comprise one or more of: a bar; hook; pin; flange; flap etc. The protrusion may be angled/curved to reach behind the product, e.g. to insert its edge into the interface between the end product and the next product in the stack. In some embodiments, the protrusion may be discontinuous along the axis of the drum (e.g. to provide a plurality of discrete portions). In some embodiments, the protrusion may be flexible, soft and/or deformable. For example, the protrusion may comprise a resiliently deformable material. In some embodiments, the protrusion may be resiliently biased/mounted to the drum. This may help to prevent damage to the product.

Once the product has been destacked by the plate 34, the product lies on the carousel or carriage 36. The carousel 36 comprises a number of faces 38 on which the product can lie. The faces 38 are generally flat. Each face 38 comprises a stop member or lip 40 to prevent the product sliding thereoff. The lip 40 may comprise a plate/flange mounted to the carousel 36. In some embodiments, the lip 40 may be integral with the carousel. In the present embodiment, the carousel comprises three faces. The carousel 36 is therefore triangular. However, it can be appreciated, any number of faces 38 may be provided as necessary, for example, between 2 and 10 faces.

The carousel 36 is rotatable from a first position where it receives the destacked product (as shown in figures 4 and 5), and a second position where it deposits the product on the output conveyor 6. In first position, a first end 42 of the face 38 (i.e. that comprising the lip 40) is aligned with the input conveyor 4. The second position, a second end 44 of the face 38 is aligned with the output conveyor 6. In the first position, the face 38 is angled toward the input conveyor 4 (e.g. by between 10 and 45 degrees). In the second position, the face 38 is angled toward the output conveyor 6 (e.g. by between 10 and 45 degrees). The product therefore slides off the face 38 and onto the output conveyor 6. The face 38 moves in a tilting, seesaw like motion to deposit individual products.

The carousel 36 is rotatable about a horizontal axis in use. The carousel 26 thus rotatable about an axis parallel to the input/output conveyor. The carousel 26 rotates about an axis parallel to the drum 32.

Typically, the carousel 36 repeatedly rotates to dispense the product. The rotation is generally in a step-wise/discontinuous fashion. The carousel 36 rotates to receive the product from input conveyor and is maintained in the first position to receive the product. After a predetermined time period, the carousel 36 rotates to the second position to dispense the product onto the output conveyor 6. The carousel then rotates such that the next face 38 is provided in the first position. In the present embodiment, the carousel rotates in single direction (i.e. anti-clockwise in figure 4).

The carousel 38 and drum 32 rotate in opposing directions in the present embodiment. In alternative embodiments, the carousel 38 may rotate in opposing directions itself between the first and second position (e.g. in an oscillating/rocking motion).

The rotation of the carousel 36 is synchronised with the rotation of the drum 32. Typically, rotation of the carousel 36 is performed once the plate 34 reaches a predetermined position (e.g. facing vertical downwards), such that the product has become fully destacked. Rotation of carousel 36 may be performed at any suitable time such that the product has time to fully rest thereon, and such that the carousel returns to the first position to receive the product after destacking.

In some embodiments, the carousel 36 may continuously rotate. The drum 32 and the carousel 36 are thus fully synchronous. The carousel is configured to rotate at such a rate that each face 38 is at a given position when the plate 34 is at a given position. Thus, the carousel 36 rotates at a speed relative to the drum 32 of 1/N, where N is the number of faces 38.

The input conveyor 4 and/or the output conveyor 6 may be synchronised with the destacking mechanism 18. This ensures the product is fed and/or removed from the system in a synchronised fashion. input conveyor 4 and/or the output conveyor 6 may be configured to move step-wise or continuously, in accordance with the previously described embodiments.

The spacing between drum 23 and the input conveyor 4 and/or the carousel 36 may be less than the height of the stacked product. The end product may therefore deform/bend during separation from the stack and/or engagement with the plate. This may aid with separation of the product. In other embodiments, the spacing between drum 23 and the input conveyor 4 and/or the carousel 36 is provided such that little or no deformation of the product is required during destacking (e.g. when the product is rigid).

The above-described destacking arrangement is provided for each respective lane 24, i.e. in parallel. The drum 32 and/or carousel 36 for each lane 24 may be capable of independent operation or may move in unison. Similarly, each lane 24 of the input and/or output conveyor may be capable of independent operation. In some embodiments, a drum/carousel configuration may destack a plurality of lanes or all of the lanes (i.e. two or more lanes are destacked by a common drum 32 and/or carousel 36).

As best seen in figure 4, a conveyor 46 partially extends into the carousel 36. The carousel 36 comprises one or more cut-out 48 to receive the conveyor 46. The conveyor 46 comprises a band/wire. The conveyor 46 is receive on a roller 50 receive within the carousel 36. The roller 50 is aligned with the cut-outs. The oller 50 may be coaxial with he carousel 36. The opposing end of the conveyor 46 is received a second roller 52. The conveyor is also support by a third roller 54. The second roller 52 and third roller 54 forms part of the output conveyor (i.e. conveyor members 26 extend therebetween). The conveyor 46 is thus partially integrated with the output conveyor 6.

In some embodiments, the drum 32 and/or carousel 36 operate at constant speed. The products are therefore destacked a fixed rate. The constant speed may be adjusted by the user in accordance with desired parameters. In some embodiments, the system 2 comprise a sensors to detect when the output conveyor is empty or a destacked product is otherwise required. The drum 32 and/or carousel 36 therefore only operate when a further destacked product is required (i.e. intermittently).

As best seen in figure 5, a sensor 56 is provided to detect movement of the drum 32. The sensor 56 is configured to detect movement of the plate 34 passing thereby. This detect destacking of product. A sensor 56 is provided in each respective lane 24. The sensor 56 is provided adjacent the output conveyor 6. The sensor 56 thus detect when the plate 34 has moved sufficiently far to fully destack the product (e.g. the plate 34 faces toward the output conveyor 6). The sensors 56 are supported by a gantry 58 (see figure 4). The gantry spans across the lanes 24.

The sensor 56 may comprise a magnetic sensor. The plate 34 may therefore comprise a magnetic material and/or have a magnet thereon. It can be appreciated that that sensor 56 may comprise any suitable arrangement to detect presence of the plate 34, for example: a light sensor; contact sensor; capacitive sensor; metal sensor; or ultrasonic sensor.

A sensor may be provide to detect the presence of the cage 20 (i.e. the cage is in a closed position and/or is attached). The system may be configured to prevent operation in the event the presence of the cage 20 is not detected. The cage sensor may be mounted on the gantry 58. The cage sensor may comprise a magnetic sensor. A magnet or magnetic material is provided on the cage 20 accordingly.

Although the present arrangement is configured to destack product, it can be appreciated that the apparatus may be used to denest (i.e. separate a product partially received within another) or otherwise separate any suitable product. The stack may be provided in any suitable orientation (e.g. vertical or horizontal).

In some embodiments, the input/output mechanism may comprise alternative means of effect movement of the stacked/destacked product. For example, the product may be effected by a puller/pusher. The pusher may be spring loaded. In some embodiments, stacked product may be biased by gravity (e.g. where provided vertically or angled). In such embodiments, the conveyor may freely move and/or comprise rollers etc.

The present apparatus provides a simple mechanism to destack or denest a product, and in particular, provides a mechanism for handling soft/fragile products. The apparatus can destack the product in parallel in a continuous fashion.

## Claims

1. A destacking apparatus comprising:
an input mechanism configured to advance a stack of products in an axial direction to a destacking mechanism such that the end product of the stack is presented to the destacking mechanism;
an output mechanism configured to output a separated product from the destacking mechanism;
where the destacking mechanism comprises a movable engagement member configured to selectively engage the end product of the stack in a direction that is offset from the axial direction to cause separation of the end product from the stack, and a movable carriage configured to receive the separated product from the engagement member and move the separated product to the output mechanism.

2. A destacking apparatus according to claim 1 for a food production line, where the moveable engagement member comprises a rotatable member having a protrusion rotatable into engagement with the end product of the stack to provide separation thereof from the stack.

3. A destacking apparatus according to claim 2, where the protrusion comprises a plate or blade.

4. A destacking apparatus according to any preceding claim, where the movable carriage comprises a rotatable or translatable carousel.

5. A destacking apparatus according to claim 4, where the carousel comprises a flat face to receive the separated product falling from the stack by the action of the moveable engagement member.

6. A destacking apparatus according to claim 4 or 5, where the carousel comprises a plurality of faces disposed about respective sides of the carousel, each face rotatable to a position to receive the product.

7. A destacking apparatus according to claim 5 or 6, where the carousel has a plurality of faces arranged in a prism-like arrangement or a triangular orientation when viewed from the side.

8. A destacking apparatus according to any of claims 5-7, where one or more face comprises a flange or lip to retain the product thereon.

9. A destacking apparatus according to any of claims 5-8, where the carousel is movable to first position where one end of the face is aligned with the input mechanism, and a second position where a second end of the face is aligned with the output mechanism.

10. A destacking apparatus according to claim 9, where in the first position, the face is angled toward the input mechanism and/or in the second position, the face is angled toward the output mechanism.

11. A destacking apparatus according to any preceding claim, where the movable engagement member is actuated in a direction that is tangential to the axial direction and/or rotatable about an axis that is substantially perpendicular to the axial direction.

12. A destacking apparatus for a food production line according to any preceding claim, where the input mechanism and/or output mechanism comprises a conveyor, e.g. where the input mechanism and/or output mechanism comprise a divider to divide the input mechanism and/or output mechanism into a plurality of lanes.

13. A destacking apparatus according to any preceding claim, where the input mechanism extends in a substantially horizontal direction in use or the input mechanism is inclined toward the destacking mechanism to bias the stacked product thereinto.

14. A destacking apparatus according to any preceding claim, where a part of the output mechanism conveyor extends into or through the movable carriage, for example where the movable carriage comprises cut-outs to receive a conveyor member of the output mechanism conveyor.

15. A destacking apparatus for a food production line according to any preceding claim, comprising a cage or enclosure configured to at least partially enclose the destacking mechanism, where the cage/enclosure is openable/removable and there is a sensor to detect the presence of the cage, the apparatus configured to prevent operation thereof in the event the presence of the cage is not detected.
